# EUROPEAN PATENT SPECIFICATION

(11) **EP 4 040 638 B1**
(45) Date of publication and mention of the grant of the patent: **28.06.2023**
(21) Application number: 21155158.5
(22) Date of filing: 04.02.2021
(51) Int. Cl.: H02J 50/12, H02J 50/80

(54) **POWER ADJUSTMENT IN A NON-REGULATED WIRELESS CHARGING SYSTEM**
LEISTUNGSANPASSUNG IN EINEM NICHTGEREGELTEN DRAHTLOSEN LADESYSTEM
RÉGLAGE DE PUISSANCE DANS UN SYSTÈME DE CHARGE SANS FIL NON RÉGULÉ

(43) Date of publication of application: 10.08.2022
(73) Proprietor: Panthronics AG, 8041 Graz (AT)
(72) Inventor: Schlager, Tobias, 8041 Graz (AT); Pieber, Michael, 8041 Graz (AT); Goitre, Alessandro, 8041 Graz (AT); Antonetti, Francesco, 8041 Graz (AT)
(74) Representative: Schwarz & Partner Patentanwälte GmbH

(56) References cited:
- WO-A1-2015/080517
- US-A1- 2017 025 897
- US-A1- 2018 272 130
- US-A1- 2019 097 448
- US-A1- 2019 334 367

## Description

### FIELD OF THE INVENTION

The present invention relates to a system of a power device and a portable device for wireless charging of a battery of the portable device, which power device comprises an antenna to emit a magnetic field with a carrier frequency to power the portable device which comprises an antenna exposed to the magnetic field and connected via a matching stage to a rectifier stage, to rectify an antenna signal, and which portable device comprises a charge stage, to sense and limit the rectified antenna signal, to provide an input voltage at an input pin of a charger IC of the portable device that provides a first charge current at an output pin connected to the battery to charge the battery for a first period of time as power source with the constant first charge current, and wherein the portable device comprises a detuning stage to change the resonance frequency of the antenna of the portable device and that the charge stage is built to limit the input voltage for the charger IC by steering the detuning stage to detune the resonance frequency of the antenna of the portable device away from the carrier frequency of the magnetic field.

### BACKGROUND OF THE INVENTION

Wireless charging is used for all kind of different portable devices like a mobile phone or earphones. The portable device just has to be dropped close-by a power device that generates and radiates a magnetic field via an antenna of the power device with the advantage that no wire is needed to charge the portable device. In some of these systems, the power device just radiates the magnetic field and some newer systems comprise a feedback loop from the portable device to the power device to regulate the power of the magnetic field.

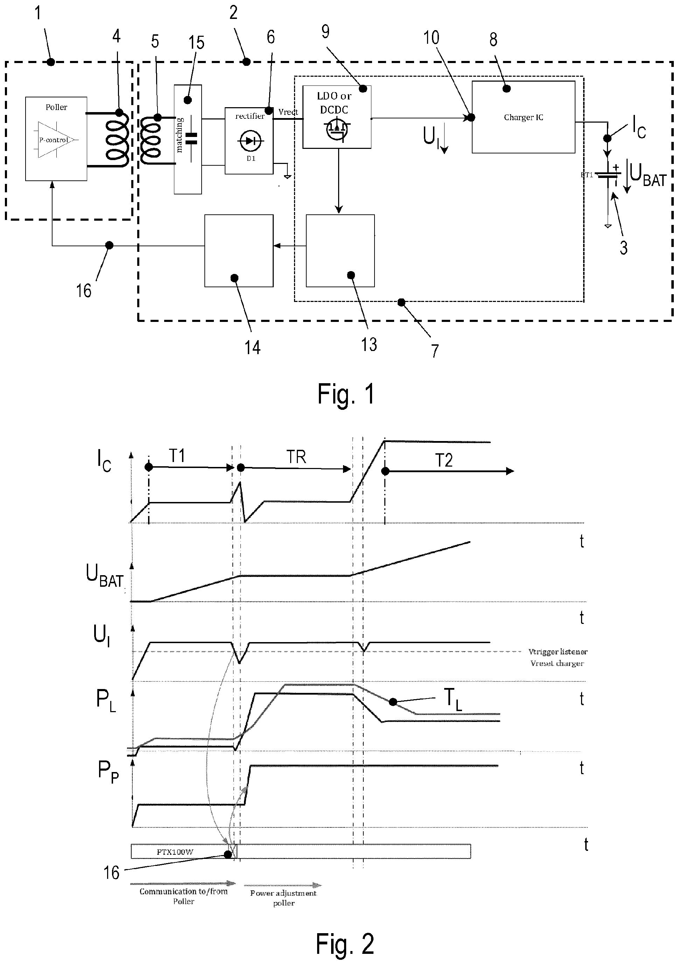

Figure 1 shows such a system of a power device 1 and a portable device 2 with a battery 3, know to a person skilled in the art. Such a system is for instance described in the NFC Forum^{™} Technical Specification Version 1.0. The power device 1 called "poller" comprises an antenna 4 that radiates a magnetic field with the carrier frequency of 13,56MHz. The portable device 2 called "listener" comprises an antenna 5 exposed to the magnetic field emitted by the power device 1. A matching circuit 15 matches the impedance of the output pins of the antenna 5 to input pins of a rectifier 6 that uses a bridge rectifier to rectify the antenna signal and to provide a DC voltage. A charge stage 7 of the portable device 2 is used to charge the battery 3. As the charge stage 7 comprises a charger IC 8 that needs a power voltage of 5V +/- 10% as input voltage U_{I}, a DC/DC converter and limiter 9 is used to sense the DC voltage provided by rectifier 6 to limit it to provide the appropriate input voltage U_{I} at an input pin 10 of charger IC 8.

Battery 3 is a Li-Ion battery that needs to be charged by charge stage 7 in different time periods with different charge currents Ic and charge voltages. Charge stage 7 furthermore comprises a digital control stage 13 that generates a power adjustment information 16 in case the input voltage U_{I} at input pin 10 and/or the charge current Ic to charge the battery 3 are too low or too high. Such power adjustment information 16 is provided by the digital control stage 13 to a Cless Communication stage 14, which complies to the NFC communication protocol to communicate the power adjustment information 16 to the power device 1. With this feedback loop from portable device 2 to power device 1, charge stage 7 can request more or less power in the magnetic field provided by the power device 1.

Figure 2 shows a time diagram of the charge current Ic in two different time periods T1 and T2 to load battery 3. Figure 2 furthermore shows the actual battery voltage U_{BAT} and the input voltage U_{I} at input pin 10 of charge IC 8 during the time periods T1 and T2 to load battery 3 and during a ramp-up period TR to ramp-up from the constant first charge current Ic in the first time period T1 to the higher constant second charge current Ic in the second time period T2. Figure 2 furthermore shows power P_{L} generated in the portable device 2 from the magnetic field to load battery 3, which power P_{L} more or less can be calculated as P_{L} = U_{I} ^{∗} I_{C} and figure 2 shows power P_{P} generated by the power device 1 in the magnetic field. Lowest block of figure 2 shows power adjustment information 16 from the portable device 2 to the power device 1 to increase the power P_{P} generated by the power device 1 in the magnetic field at the end of time period T1.

As shown in figure 2, battery 3 is loaded by charger IC 8 with constant first charge current Ic during the first time period T1 until U_{BAT} reaches a particular voltage. From this time on Li-Ion battery 3 may be loaded with the higher second charge current Ic in the second time period T2 until U_{BAT} reaches a target voltage and loading switches in a third time period to constant voltage charging. At the end of the first time period T1 charge stage 7 ramps-up the charge current Ic what reduces the input voltage U_{I} as power P_{L} generated in the portable device 2 is not enough to load battery 3 in the second time period T2 with the high second charge current Ic. Charge stage 7 therefore transmits a power adjustment information 16 to power device 1 to increase the power P_{P} generated by the power device 1 in the magnetic field. As this feedback loop takes some time to have effect for charge IC 8, input voltage U_{I} drops furthermore and reaches a V_{reset charger} voltage level, what leads to a power-off reset of the charger IC 8 due to too low input voltage U_{I}. Charging of battery 3 therefore is interrupted for a short period of time, as can be seen in the drop of charge current Ic at the beginning of transition period TR, what is a disadvantage.

Due to the upfront communication of power adjustment information 16, the power device 1 increases its output power P_{P} at the beginning of transition period TR. Within portable device 2 this increased power P_{L} leads to an increase of the junction temperature TL, because the high power has to be burnt internally until the charge state will leave the reset state and come to the point where it is switching again to the high second charge current Ic. After this transition time TR the junction temperature TL within the portable device 2 will decrease again, because most of the power is delivered to the battery 3. The high junction temperature TL while the transition period TR can cause problems, because it might exceed the maximum allowed junction temperature TL of the portable device 2, what is a disadvantage.

US 2017/0025897 A1 discloses a system of a power device and a portable device and which power device is configured to wirelessly charge the battery of the portable device. The portable device comprises a charger stage to charge the battery with the energy from the rectified antenna signal of the antenna of the portable device. For maximal power transfer a matching stage tunes the antenna in resonance and the charge stage is configured to steer a detuning stage to detune the resonance of the antenna of the portable device away from the carrier frequency of the magnetic field to limit the rectified antenna signal as input voltage of the charger stage. This known system provides the disadvantage that the portable device may only detune the antenna to reduce the power transferred from the power device, but may not request more power if needed to charge the battery.

US 2019/334367 A1 discloses a similar system as described above, but with more than one receiver. Several of these receivers receive power in a wireless manner and simultaneously to charge the battery of the portable device with more power.

US 2018/272130 A1 discloses the transmission of a request by a receiver of such a system to interrupt power transmission at the power device simultaneously with detuning.

Furthermore WO 2015/080517 A1 and US 2019/097448 A1 disclose to charge a battery wireless.

### SUMMARY OF THE INVENTION

It is an object of the invention to provide a system of a power device and a portable device with a charger IC for wireless charging of the battery of the portable device to avoid an substantial increase of the junction temperature TL of the portable device during the transition period TR.

This object is achieved in a system according to claim 1.

This inventive concept enables that the portable device dynamically changes the resonance frequency of its antenna to take more or less power from the magnetic field generated by the power device during the process to load the battery of the portable device. As substantially only the amount of power needed to load the battery during the different charge phases of the battery is take from the magnetic field, there is less or no waste power in the portable device that needs to be transformed into heat. It is furthermore possible to reduce the PCB size, because there is no need to achieve such a low temperature coefficient to get rid of the heat compared to the state of the art solution.

The feedback loop enables to steer the power device to generate more or less power in the magnetic field. As this feedback loop takes some time to take effect with more or less power P_{L} generated within the portable device, the inventive detuning provides a big advantage to dynamically reduce the power taken from the magnetic field during a change of the power in the magnetic field.

The teaching of the present disclosure will be apparent from and elucidated with reference to the detailed description hereinafter.

### BRIEF DESCRIPTION OF THE DRAWINGS

Figure 1 shows a system known to a person skilled in the art, which system comprises a power device and a portable device with charger IC to charge a battery wireless.
Figure 2 shows a time diagram of the charge current and other parameters to charge the battery of the portable device of the system according to figure 1.
Figure 3 shows a system according to the invention, which comprises a power device and a portable device with a detuning stage to charge a battery wireless.
Figure 4 shows a time diagram of the charge current and other parameters to charge the battery of the portable device of the system according to figure 3.

### DETAILED DESCRIPTION OF EMBODIMENTS

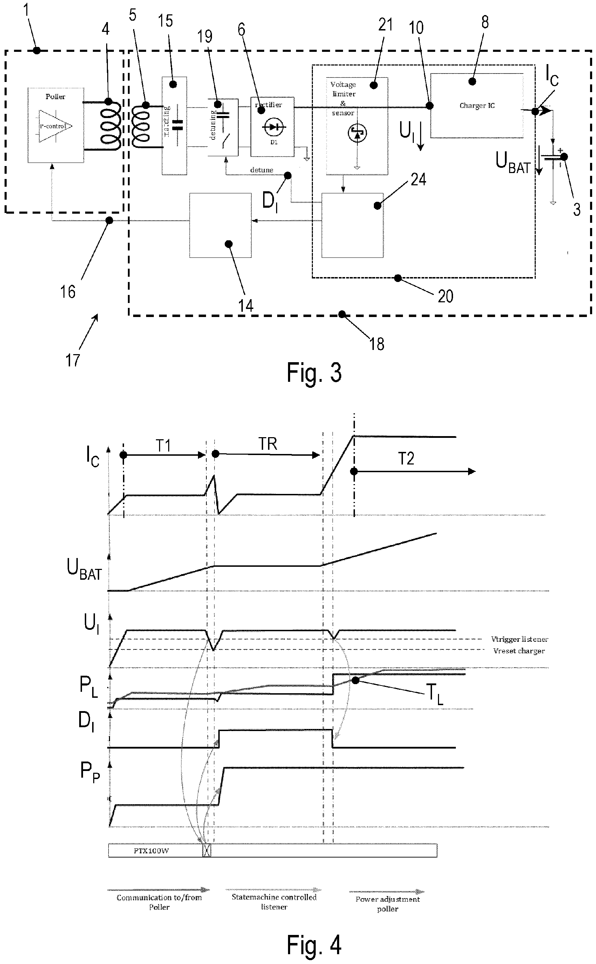

Figure 3 shows a first embodiment of a system 17 of a power device 1 and a portable device 18 with a battery 3 according to the invention. The same reference signs are used for stages that have the same technical function as already described in the system of figure 1 known to a person skilled in the art. Power device 1 called "poller" comprises an antenna 4 that radiates a magnetic field with the frequency of 13,56MHz. Power device 1 could be a charging device connected to the power grid or powered by a battery power pack. Portable device 18 called "listener" comprises an antenna 5 exposed to the magnetic field emitted by power device 1. Portable device 18 could be any device like e.g. earphones or a mobile phone with a wireless interface and a battery 3. A matching circuit 15 matches the impedance of the output pins of the antenna 5 to input pins of a rectifier 6 via a detuning stage 19. Rectifier 6 uses a bridge rectifier to rectify the antenna signal and to provide a DC voltage as input voltage at a charge stage 20. As charge stage 20 comprises a charger IC 8 that needs a power voltage of 5V +/- 10% as input voltage U_{I}, a voltage limiter 21 is used to sense the DC voltage provided by rectifier 6 and to limit it to provide the appropriate input voltage U_{I} at an input pin 10 of charger IC 8.

Battery 3 is a Li-Ion battery that needs to be charged by charge stage 20 in different time periods with different charge currents I_{C} and charge voltages. Charge stage 20 furthermore comprises a digital control stage 24 that generates a power adjustment information 16 in case the input voltage U_{I} at input pin 10 and/or the charge current Ic to charge the battery 3 are too low or too high. Such power adjustment information 16 is provided by the digital control stage 24 to a Cless Communication stage 14, which complies to the NFC communication protocol to communicate the power adjustment information 16 to the power device 1. With this feedback loop from portable device 18 to power device 1, charge stage 20 can request more or less power in the magnetic field provided by the power device 1.

As shown in figure 4, battery 3 is loaded by charger IC 8 with constant first charge current Ic, which is about 10% of the maximal charge current Ic to be used for the particular battery 3, during the first time period T1 until U_{BAT} reaches a particular voltage. From this time on Li-Ion battery 3 may be loaded with the higher second charge current Ic, which is close to 100% of the maximal charge current Ic to be used for the particular battery 3, in the second time period T2 until U_{BAT} reaches a target voltage. From this time on loading switches in a third time period to constant voltage charging and charge current Ic is decreasing automatically according to the battery's charging condition until the charger stops charging e.g. when the charging current has decreased to 10% of the maximum charging current. The principle to load a Li-Ion battery in these time periods is known to a person skilled in the art.

At the end of the first time period T1 charge stage 20 ramps-up the charge current Ic, what reduces the input voltage U_{I} as power P_{L} generated in the portable device 2 is not enough to load battery 3 in the second time period T2 with the high second charge current Ic. Charge stage 20 therefore transmits a power adjustment information 16 to power device 1 to increase the power P_{P} generated by the power device 1 in the magnetic field. As this feedback loop takes some time input voltage U_{I} drops furthermore and reaches a V_{reset charger} voltage level what leads to a power-off reset of the charger IC due to too low input voltage U_{I} what would increase the junction temperature TL as no power is used to charge battery 3 and all power P_{L} generated would have to be transformed into heat. To avoid that digital control stage 24 is built to steer detuning stage 19 with a detuning information D_{I} shown in figure 4 to change the resonance frequency of the antenna of the portable device 18 and therefore is built to limit power P_{L} and the input voltage U_{I} for the charger IC 8 by detuning the resonance frequency of the antenna 5. Detuning stage 19 may comprise one or more discrete capacities connected with switches parallel to the matching stage 15 and antenna 5, which capacities change the resonance frequency of the antenna 5. The detuning stage 19 therefore comprises at least two tuning configurations to tune the resonance frequency of the antenna 5 in a first tuning configuration closer to or exact to the carrier frequency of the magnetic field generated by power device 1 to provide a higher power P_{L} and therefore a higher input voltage U_{I} at the input pin 10 of the charger IC 8 than in a second tuning configuration with the resonance frequency of the antenna 5 farer away from the carrier frequency of the magnetic field.

Due to the upfront communication of the power adjustment information 16 the power device 1 will increase its output power P_{P}. On portable device 2 side this high power P_{L} would lead to an increase of the junction temperature TL. To overcome that problem the detuning stage 19 changes the resonance frequency of the portable device 2 away from the system resonance frequency and the incoming power P_{L} will be reduced until the charge state 20 will leave the reset state and come to the point where it is switching again to the high second charge current IC. At this point in time digital control stage 24 is built to steer detuning stage 19 with a detuning information D_{I} that detuning stage 19 changes again the resonance frequency to the optimum for power transfer. By means of this de- and retuning during this transition time TR the system 17 can overcome the high junction temperature TL problem.

In the invention, charge stage 20 must comprise a temperature sensor. The charge stage 20 can be built to steer the detuning stage 19 to detune the resonance frequency of the antenna 5 of the portable device 18 away from the carrier frequency of the magnetic field generated by the power device 1, if the sensed temperature T_{L} reaches a maximum temperature limit. In this embodiment detuning stage 19 is used to ensure that overheat of the portable device 18 and/or charger IC 8 is prevented to avoid damages. As a possible next step charge stage 20 may generate the power adjustment information 16 for the power device 1 to decrease the power of the magnetic field, if the detuning stage 19 had to detune the resonance frequency of the antenna 5 of the portable device 18 to reduce the sensed temperature T_{L}. In another embodiment of the invention the power adjustment information 16 for the power device 1 is generated to decrease the power of the magnetic field, if the detuning stage 19 had to detune the resonance frequency of the antenna 5 of the portable device 18 to reduce the input voltage U_{I} at the input pin 10 of the charger IC 8.

In another example not covered by this invention two or more portable devices of the system are exposed to the magnetic field of the power device 1 to load the batteries of these portable devices. As all these portable devices may enter the magnetic field at different time instances and all of their batteries may be in different charge conditions, the feedback loop described above with a power adjustment information 16 from the portable device to increase or decrease the power P_{P} generated by power device 1 in the magnetic field is not possible. Therefore the portable devices have to deal with the power P_{P} generated by power device 1 as is. To achieve that a method may be used where the detuning stage detunes the resonance frequency of the antenna 5 of the portable device away from the carrier frequency of the magnetic field while the charger IC 8 charges the battery 3 with the first charge current Ic and where the resonance frequency of the antenna 5 of the portable device 18 is tuned to the carrier frequency of the magnetic field while the charger IC 8 charges the battery 3 with the second charge current Ic, which is higher than the first charge current Ic. Assuming that for a typical charging cycle of a battery 3 the battery 3 is never drained so much that the battery 3 has to be charged with the low first charge current Ic for a long time it is possible to start already with the high power P_{P} state on power device 1 side and detune the portable device 2 to the second tuning configuration from the beginning during the first time period T1. When the digital control stage 24 at the end of the first time period T1 switches to high second charging current Ic, the digital control stage 24 only needs to switch detuning stage 19 to the tuned first tuning configuration state and by that the system 17 can overcome the reset of the charger IC 8 and can decrease the transition time TR without having any temperature issues.

## Claims

1. System (17) comprising a power device (1) and only one portable device (18),
wherein the portable device (1) comprises a battery (3) and the power device is configured to wirelessly charge the battery, wherein the power device (1) comprises an antenna (4) configured to emit a magnetic field with a carrier frequency to power the portable device (18), and wherein the portable device further comprises an antenna (5), a matching stage, a rectifier stage (6) and a charge stage, and wherein said charge stage is configured to sense and limit the rectified antenna signal and **characterized in, that**
the charge stage comprises a charger IC including an input pin connected to the rectifier stage and an output pin connected to the battery, wherein the antenna of the portable device is configured to be exposed to the magnetic field and connected via the matching stage (15) to the rectifier stage (6) to rectify an antenna signal to provide an input voltage (Ui) at the input pin (10) of the charger IC (8), and wherein the charger IC (8) being configured to provide a first charge current (Ic) at the output pin to charge the battery (3) for a first period of time (T1) as power source with the constant first charge current (Ic), and wherein the portable device (18) comprises a detuning stage (19) to change the resonance frequency of the antenna (5) of the portable device (18) and that the charge stage (20) is built to limit the input voltage (U_{I}) for the charger IC (8) by steering the detuning stage (19) to detune the resonance frequency of the antenna (5) of the portable device (18) away from the carrier frequency of the magnetic field, wherein the power device (1) is built to receive and process a power adjustment information (16) from the only portable device (18) exposed to the magnetic field to increase or to decrease the power of the magnetic field emitted by the antenna (4) of the power device (1) and wherein the charge stage (20) of the portable device (18) is built to generate the power adjustment information (16) for the power device (1) to increase or to decrease the power of the magnetic field to steer the input voltage (U_{I}) of the charger IC (8) in a preferred voltage range, in particular within the voltage range of the technical specification of the charger IC (8), and wherein
the portable device (18) is built to provide a second charge current (Ic) at the output pin of the charge IC (8) to charge the battery (3) for a second period of time (T2) as power source with the constant second charge current (Ic) higher than the first charge current (Ic) and to provide enough power for the ramp-up from the first charge current (Ic) to the second charge current (I_{C}) and the charge stage (20) comprises a temperature sensor and is built to send a power adjustment information (16) to the power device (1) to increase the power of the magnetic field and to substantially at the same time detune the antenna (5) for a ramp-up period of time (T_{R}) to avoid that the sensed temperature (T_{L}) reaches a maximum temperature limit.

2. System (17) according to claim 1, wherein the detuning stage (19) comprises at least two tuning configurations to tune the resonance frequency of the antenna (5) in a first tuning configuration closer to the carrier frequency of the magnetic field to provide a higher input voltage (Ui) at the input pin (10) of the charger IC (8) than in a second tuning configuration with the resonance frequency of the antenna farther away from the carrier frequency of the magnetic field.

3. System (17) according to any of the claims 1 or 2, wherein the charge stage (20) is built to steer the detuning stage (19) to detune the resonance frequency of the antenna (5) of the portable device (18) away from the carrier frequency of the magnetic field, if the sensed temperature (T_{L}) reaches a maximum temperature limit.

4. System (17) according to claim 1, wherein the charge stage (20) is configured to generate the power adjustment information (16) for the power device (1) to decrease the power of the magnetic field, if the detuning stage (19) had to detune the resonance frequency of the antenna (5) of the portable device (18) to reduce the input voltage (Ui) at the input pin (10) of the charger IC (8).

5. System (17) according to claim 2, which portable device (18) is built to provide a second charge current (Ic) at the output pin of the charge IC (8) to charge the battery (3) for a second period of time (T2) as power source with the constant second charge current (Ic) higher than the first charge current (Ic) and to provide enough power for the ramp-up from the first charge current (I_{C}) to the second charge current (I_{C}) and the charge stage (20) is built to switch the detuning stage (19) at the end of the first time period (T1) from the second tuning configuration to the first tuning configuration.

6. System (17) according to any of the claims 1 to 5, wherein the power device (1) comprises a battery power pack configured to provide the power to the other components of the power device (1).

7. Method for using the system (17) of any of claims 1 to 6, which system (17) comprises a power device (1) and only one portable device (18), wherein the portable device (1) comprises a battery (3) and the power device (1) wirelessly charges the battery (3), wherein the power device (1) comprises an antenna (4) and emits a magnetic field with a carrier frequency to power the portable device (18), and wherein the portable device (18) further comprises an antenna (5), a matching stage, a rectifier stage (6) and a charge stage, and wherein said charge stage senses and limits the rectified antenna signal, **characterized in that**
the charge stage comprises a charger IC (8) including an input pin connected to the rectifier stage and an output pin connected to the battery (3), wherein the antenna (4) of the portable device (18) is exposed to the magnetic field and connected via the matching stage (15) to the rectifier stage (6) to rectify an antenna signal to provide an input voltage (Ui) at the input pin (10) of the charger IC (8), and wherein the charger IC (8) provides a first charge current (Ic) at the output pin to charge the battery (3) for a first period of time (T 1) as power source with the constant first charge current (I_{C}), and wherein the portable device (18) comprises a detuning stage (19), which changes the resonance frequency of the antenna (5) of the portable device (18), and that the charge stage (20) limits the input voltage (U_{I}) for the charger IC (8) by steering the detuning stage (19) to detune the resonance frequency of the antenna (5) of the portable device (18) away from the carrier frequency of the magnetic field, wherein
the power device (1) receives and processes a power adjustment information (16) from the only portable device (18) exposed to the magnetic field to increase or to decrease the power of the magnetic field emitted by the antenna (4) of the power device (1) and wherein the charge stage (20) of the portable device (18) generates the power adjustment information (16) for the power device (1) to increase or to decrease the power of the magnetic field to steer the input voltage (U_{I}) of the charger IC (8) in a preferred voltage range, in particular within the voltage range of the technical specification of the charger IC (8), and wherein
the portable device (18) provides a second charge current (Ic) at the output pin of the charge IC (8) to charge the battery (3) for a second period of time (T2) as power source with the constant second charge current (Ic) higher than the first charge current (Ic) to provide enough power for the ramp-up from the first charge current (Ic) to the second charge current (Ic) and the charge stage (20) comprises a temperature sensor and sends a power adjustment information (16) to the power device (1) to increase the power of the magnetic field and substantially at the same time detunes the antenna (5) for a ramp-up period of time (T_{R}) to avoid that the sensed temperature (T_{L}) reaches a maximum temperature limit.

8. Method according to claim 7, **characterized in that** the resonance frequency of the antenna (5) of the portable device (18) is detuned away from the carrier frequency of the magnetic field, if the sensed temperature (T_{L}) reaches a maximum temperature limit.

9. Method according to claims 7 or 8, **characterized in that** the resonance frequency of the antenna (5) of the portable device (18) is detuned away from the carrier frequency of the magnetic field while the charger IC (8) charges the battery (3) with the first charge current (Ic) and that the resonance frequency of the antenna (5) of the portable device (18) is tuned to the carrier frequency of the magnetic field while the charger IC (8) charges the battery (3) with the second charge current (Ic), which is higher than the first charge current (Ic).

## Patentansprüche

1. System (17), umfassend ein Leistungsgerät (1) und nur ein tragbares Gerät (18), wobei das tragbare Gerät (1) eine Batterie (3) umfasst und das Leistungsgerät zum kabellosen Aufladen der Batterie konfiguriert ist, wobei das Leistungsgerät (1) eine Antenne (4) umfasst, die dazu konfiguriert ist, ein Magnetfeld mit einer Trägerfrequenz zu emittieren, um das tragbare Gerät (18) mit Energie zu versorgen, und wobei das tragbare Gerät ferner eine Antenne (5), eine Anpassungsstufe, eine Gleichrichterstufe (6) und eine Ladestufe umfasst, und wobei die Ladestufe dazu konfiguriert ist, das gleichgerichtete Antennensignal zu erfassen und zu begrenzen, und **dadurch gekennzeichnet, dass**
die Ladestufe einen Lade-IC umfasst, der einen mit der Gleichrichterstufe verbundenen Eingangsstift und einen mit der Batterie verbundenen Ausgangsstift umfasst, wobei die Antenne des tragbaren Geräts dazu konfiguriert ist, dem Magnetfeld ausgesetzt und über die Anpassungsstufe (15) mit der Gleichrichterstufe (6) verbunden zu werden, um ein Antennensignal gleichzurichten, um eine Eingangsspannung (U_{I}) am Eingangsstift (10) des Lade-IC (8) bereitzustellen, und wobei der Lade-IC (8) dazu konfiguriert ist, einen ersten Ladestrom (Ic) am Ausgangsstift bereitzustellen, um die Batterie (3) für eine erste Zeitspanne (T1) als Stromquelle mit dem konstanten ersten Ladestrom (Ic) aufzuladen, und wobei das tragbare Gerät (18) eine Verstimmungsstufe (19) zur Änderung der Resonanzfrequenz der Antenne (5) des tragbaren Geräts (18) umfasst, und dass die Ladestufe (20) so konstruiert ist, um die Eingangsspannung (Ui) für den Lade-IC (8) zu begrenzen, indem die Verstimmungsstufe (19) so gesteuert wird, um die Resonanzfrequenz der Antenne (5) des tragbaren Geräts (18) von der Trägerfrequenz des Magnetfelds weg zu verstimmen, wobei das Leistungsgerät (1) so konstruiert ist, um Leistungsanpassungsinformationen (16) von dem einzigen tragbaren Gerät (18), das dem Magnetfeld ausgesetzt ist, zu empfangen und zu verarbeiten, um die Leistung des von der Antenne (4) des Leistungsgeräts (1) emittierten Magnetfelds zu erhöhen oder zu verringern, und wobei die Ladestufe (20) des tragbaren Geräts (18) zur Generierung der Leistungsanpassungsinformationen (16) für das Leistungsgerät (1) konstruiert ist, um die Leistung des Magnetfelds zu erhöhen oder zu verringern, um die Eingangsspannung (U_{I}) des Lade-IC (8) in einem bevorzugten Spannungsbereich, insbesondere innerhalb des Spannungsbereichs der technischen Spezifikation des Lade-IC (8), zu steuern, und
wobei das tragbare Gerät (18) so konstruiert ist, um einen zweiten Ladestrom (Ic) am Ausgangsstift des Lade-IC (8) bereitzustellen, um die Batterie (3) für eine zweite Zeitspanne (T2) als Stromquelle mit dem konstanten zweiten Ladestrom (Ic), der höher als der erste Ladestrom (Ic) ist, aufzuladen und um genügend Leistung für das Hochfahren vom ersten Ladestrom (I_{C}) zum zweiten Ladestrom (I_{C}) bereitzustellen, und die Ladestufe (20) einen Temperaturfühler umfasst und so konstruiert ist, um Leistungsanpassungsinformationen (16) an das Leistungsgerät (1) zu senden, um die Leistung des Magnetfelds zu erhöhen, und um im Wesentlichen gleichzeitig die Antenne (5) für eine Hochfahrzeitspanne (T_{R}) zu verstimmen, um zu vermeiden, dass die erfasste Temperatur (T_{L}) eine maximale Temperaturgrenze erreicht.

2. System (17) gemäß Anspruch 1, wobei die Verstimmungsstufe (19) mindestens zwei Einstellkonfigurationen umfasst, um die Resonanzfrequenz der Antenne (5) in einer ersten Einstellkonfiguration näher an die Trägerfrequenz des Magnetfelds einzustellen, um eine höhere Eingangsspannung (U_{I}) am Eingangsstift (10) des Lade-IC (8) als in einer zweiten Einstellkonfiguration bereitzustellen, wobei die Resonanzfrequenz der Antenne weiter von der Trägerfrequenz des Magnetfelds entfernt ist.

3. System (17) gemäß einem der Ansprüche 1 oder 2, wobei die Ladestufe (20) so konstruiert ist, dass sie die Verstimmungsstufe (19) so steuert, um die Resonanzfrequenz der Antenne (5) des tragbaren Geräts (18) weg von der Trägerfrequenz des Magnetfelds zu verstimmen, wenn die erfasste Temperatur (T_{L}) eine maximale Temperaturgrenze erreicht.

4. System (17) gemäß Anspruch 1, wobei die Ladestufe (20) zur Generierung der Leistungsanpassungsinformationen (16) für das Leistungsgerät (1) konfiguriert ist, um die Leistung des Magnetfelds zu verringern, wenn die Verstimmungsstufe (19) die Resonanzfrequenz der Antenne (5) des tragbaren Geräts (18) verstimmen musste, um die Eingangsspannung (U_{I}) am Eingangsstift (10) des Lade-IC (8) zu verringern.

5. System (17) gemäß Anspruch 2, wobei das tragbare Gerät (18) zur Bereitstellung eines zweiten Ladestroms (Ic) am Ausgangsstift des Lade-IC (8) konstruiert ist, um die Batterie (3) für eine zweite Zeitspanne (T2) als Stromquelle mit dem konstanten zweiten Ladestrom (Ic), der höher als der erste Ladestrom (Ic) ist, aufzuladen und um genügend Leistung für das Hochfahren vom ersten Ladestrom (Ic) zum zweiten Ladestrom (Ic) bereitzustellen, und die Ladestufe (20) so konstruiert ist, um die Verstimmungsstufe (19) am Ende der ersten Zeitspanne (T1) von der zweiten Einstellkonfiguration in die erste Einstellkonfiguration umzuschalten.

6. System (17) gemäß einem der Ansprüche 1 bis 5, wobei das Leistungsgerät (1) ein Batterie-Netzteil umfasst, das dazu konfiguriert ist, die anderen Komponenten des Leistungsgeräts (1) mit der Leistung zu versorgen.

7. Verfahren zur Verwendung des Systems (17) nach einem der Ansprüche 1 bis 6, wobei das System (17) ein Leistungsgerät (1) und nur ein tragbares Gerät (18) umfasst, wobei das tragbare Gerät (1) eine Batterie (3) umfasst und das Leistungsgerät (1) die Batterie (3) kabellos auflädt, wobei das Leistungsgerät (1) eine Antenne (4) umfasst und ein Magnetfeld mit einer Trägerfrequenz emittiert, um das tragbare Gerät (18) mit Energie zu versorgen, und wobei das tragbare Gerät (18) ferner eine Antenne (5), eine Anpassungsstufe, eine Gleichrichterstufe (6) und eine Ladestufe umfasst, und wobei die Ladestufe das gleichgerichtete Antennensignal erfasst und begrenzt, **dadurch gekennzeichnet, dass**
die Ladestufe einen Lade-IC (8) umfasst, der einen mit der Gleichrichterstufe verbundenen Eingangsstift und einen mit der Batterie (3) verbundenen Ausgangsstift umfasst, wobei die Antenne (4) des tragbaren Geräts (18) dem Magnetfeld ausgesetzt und über die Anpassungsstufe (15) mit der Gleichrichterstufe (6) verbunden wird, um ein Antennensignal gleichzurichten, um eine Eingangsspannung (U_{I}) am Eingangsstift (10) des Lade-IC (8) bereitzustellen, und wobei der Lade-IC (8) einen ersten Ladestrom (Ic) am Ausgangsstift bereitstellt, um die Batterie (3) für eine erste Zeitspanne (T1) als Stromquelle mit dem konstanten ersten Ladestrom (Ic) aufzuladen, und wobei das tragbare Gerät (18) eine Verstimmungsstufe (19) umfasst, welche die Resonanzfrequenz der Antenne (5) des tragbaren Geräts (18) ändert, und dass die Ladestufe (20) die Eingangsspannung (Ui) für den Lade-IC (8) begrenzt, indem die Verstimmungsstufe (19) so gesteuert wird, um die Resonanzfrequenz der Antenne (5) des tragbaren Geräts (18) von der Trägerfrequenz des Magnetfelds weg zu verstimmen, wobei das Leistungsgerät (1) Leistungsanpassungsinformationen (16) von dem einzigen tragbaren Gerät (18), das dem Magnetfeld ausgesetzt ist, empfängt und verarbeitet, um die Leistung des von der Antenne (4) des Leistungsgeräts (1) emittierten Magnetfelds zu erhöhen oder zu verringern, und wobei die Ladestufe (20) des tragbaren Geräts (18) die Leistungsanpassungsinformationen (16) für das Leistungsgerät (1) generiert, um die Leistung des Magnetfelds zu erhöhen oder zu verringern, um die Eingangsspannung (U_{I}) des Lade-IC (8) in einem bevorzugten Spannungsbereich, insbesondere innerhalb des Spannungsbereichs der technischen Spezifikation des Lade-IC (8), zu steuern, und
wobei das tragbare Gerät (18) einen zweiten Ladestrom (Ic) am Ausgangsstift des Lade-IC (8) bereitstellt, um die Batterie (3) für eine zweite Zeitspanne (T2) als Stromquelle mit dem konstanten zweiten Ladestrom (Ic), der höher als der erste Ladestrom (Ic) ist, aufzuladen, um genügend Leistung für das Hochfahren vom ersten Ladestrom (Ic) zum zweiten Ladestrom (Ic) bereitzustellen, und die Ladestufe (20) einen Temperaturfühler umfasst und Leistungsanpassungsinformationen (16) an das Leistungsgerät (1) sendet, um die Leistung des Magnetfelds zu erhöhen, und im Wesentlichen gleichzeitig die Antenne (5) für eine Hochfahrzeitspanne (T_{R}) verstimmt, um zu vermeiden, dass die erfasste Temperatur (T_{L}) eine maximale Temperaturgrenze erreicht.

8. Verfahren gemäß Anspruch 7, **dadurch gekennzeichnet, dass** die Resonanzfrequenz der Antenne (5) des tragbaren Geräts (18) von der Trägerfrequenz des Magnetfelds weg verstimmt wird, wenn die erfasste Temperatur (T_{L}) eine maximale Temperaturgrenze erreicht.

9. Verfahren gemäß Anspruch 7 oder 8, **dadurch gekennzeichnet, dass** die Resonanzfrequenz der Antenne (5) des tragbaren Geräts (18) von der Trägerfrequenz des Magnetfelds weg verstimmt wird, während der Lade-IC (8) die Batterie (3) mit dem ersten Ladestrom (Ic) auflädt, und dass die Resonanzfrequenz der Antenne (5) des tragbaren Geräts (18) auf die Trägerfrequenz des Magnetfelds eingestellt wird, während der Lade-IC (8) die Batterie (3) mit dem zweiten Ladestrom (Ic), der höher als der erste Ladestrom (Ic) ist, auflädt.

## Revendications

1. Système (17) comprenant un dispositif d'alimentation (1) et un seul dispositif portable (18), dans lequel le dispositif portable (1) comprend une batterie (3) et le dispositif d'alimentation est configuré pour charger sans fil la batterie, dans lequel le dispositif d'alimentation (1) comprend une antenne (4) configurée pour émettre un champ magnétique avec une fréquence porteuse pour alimenter le dispositif portable (18), et dans lequel le dispositif portable comprend en outre une antenne (5), un étage d'appariement, un étage de redresseur (6) et un étage de charge, et dans lequel ledit étage de charge est configuré pour détecter et limiter le signal d'antenne redressé et **caractérisé en ce que**,
l'étage de charge comprend un CI de chargeur incluant une broche d'entrée connectée à l'étage de redresseur et une broche de sortie connectée à la batterie, dans lequel l'antenne du dispositif portable est configurée pour être exposée au champ magnétique et connectée via l'étage d'appariement (15) à l'étage de redresseur (6) pour redresser un signal d'antenne afin de fournir une tension d'entrée (Ui) au niveau de la broche d'entrée (10) du CI de chargeur (8), et dans lequel le CI de chargeur (8) est configuré pour fournir un premier courant de charge (I_{C}) au niveau de la broche de sortie pour charger la batterie (3) pendant une première période de temps (T₁) en tant que source d'alimentation avec le premier courant de charge constant (Ic), et dans lequel le dispositif portable (18) comprend un étage de désaccord (19) pour changer la fréquence de résonance de l'antenne (5) du dispositif portable (18) et **en ce que** l'étage de charge (20) est construit pour limiter la tension d'entrée (Ui) pour le CI de chargeur (8) en commandant l'étage de désaccord (19) pour désaccorder la fréquence de résonance de l'antenne (5) du dispositif portable (18) loin de la fréquence porteuse du champ magnétique, dans lequel le dispositif d'alimentation (1) est construit pour recevoir et traiter une information d'ajustement de puissance (16) provenant du seul dispositif portable (18) exposé au champ magnétique pour augmenter ou diminuer la puissance du champ magnétique émis par l'antenne (4) du dispositif d'alimentation (1) et dans lequel l'étage de charge (20) du dispositif portable (18) est construit pour générer l'information d'ajustement de puissance (16) pour le dispositif d'alimentation (1) pour augmenter ou diminuer la puissance du champ magnétique pour diriger la tension d'entrée (U_{I}) du CI de chargeur (8) dans une plage de tension préférée, en particulier dans la plage de tension de la spécification technique du CI de chargeur (8), et dans lequel
le dispositif portable (18) est construit pour fournir un second courant de charge (I_{C}) au niveau de la broche de sortie du CI de chargeur (8) afin de charger la batterie (3) pendant une seconde période de temps (T2) en tant que source d'alimentation avec le second courant de charge constant (I_{C}) supérieur au premier courant de charge (I_{C}) et pour fournir suffisamment de puissance pour la montée en puissance du premier courant de charge (I_{C}) au second courant de charge (I_{C}) et l'étage de charge (20) comprend un capteur de température et est construit pour envoyer une information d'ajustement de puissance (16) au dispositif d'alimentation (1) afin d'augmenter la puissance du champ magnétique et de désaccorder sensiblement en même temps l'antenne (5) pendant une période de temps de montée en puissance (T_{R}) afin d'éviter que la température détectée (T_{L}) atteigne une limite de température maximale.

2. Système (17) selon la revendication 1, dans lequel l'étage de désaccord (19) comprend au moins deux configurations d'accord pour accorder la fréquence de résonance de l'antenne (5) dans une première configuration d'accord plus proche de la fréquence porteuse du champ magnétique afin de fournir une tension d'entrée (U_{I}) plus élevée au niveau de la broche d'entrée (10) du CI de chargeur (8) que dans une seconde configuration d'accord avec la fréquence de résonance de l'antenne plus éloignée de la fréquence porteuse du champ magnétique.

3. Système (17) selon l'une quelconque des revendications 1 ou 2, dans lequel l'étage de charge (20) est construit pour diriger l'étage de désaccord (19) afin de désaccorder la fréquence de résonance de l'antenne (5) du dispositif portable (18) loin de la fréquence porteuse du champ magnétique, si la température détectée (T_{L}) atteint une limite de température maximale.

4. Système (17) selon la revendication 1, dans lequel l'étage de charge (20) est configuré pour générer l'information d'ajustement de puissance (16) pour le dispositif d'alimentation (1) afin de diminuer la puissance du champ magnétique, si l'étage de désaccord (19) devait désaccorder la fréquence de résonance de l'antenne (5) du dispositif portable (18) pour réduire la tension d'entrée (Ui) au niveau de la broche d'entrée (10) du CI de chargeur (8).

5. Système (17) selon la revendication 2, lequel dispositif portable (18) est construit pour fournir un second courant de charge (I_{C}) au niveau de la broche de sortie du CI de chargeur (8) afin de charger la batterie (3) pendant une seconde période de temps (T2) en tant que source d'alimentation avec le second courant de charge constant (I_{C}) supérieur au premier courant de charge (I_{C}) et pour fournir suffisamment de puissance pour la montée en puissance depuis le premier courant de charge (I_{C}) vers le second courant de charge (I_{C}) et l'étage de charge (20) est construit pour commuter l'étage de désaccord (19) à la fin de la première période de temps (T1) depuis la seconde configuration d'accord vers la première configuration d'accord.

6. Système (17) selon l'une quelconque des revendications 1 à 5, dans lequel le dispositif d'alimentation (1) comprend un bloc d'alimentation de batterie configuré pour fournir de la puissance aux autres composants du dispositif d'alimentation (1).

7. Procédé d'utilisation du système (17) selon l'une quelconque des revendications 1 à 6, lequel système (17) comprend un dispositif d'alimentation (1) et un seul dispositif portable (18), dans lequel le dispositif portable (1) comprend une batterie (3) et le dispositif d'alimentation (1) charge sans fil la batterie (3), dans lequel le dispositif d'alimentation (1) comprend une antenne (4) et émet un champ magnétique avec une fréquence porteuse pour alimenter le dispositif portable (18), et dans lequel le dispositif portable (18) comprend en outre une antenne (5), un étage d'appariement, un étage de redresseur (6) et un étage de charge, et dans lequel ledit étage de charge détecte et limite le signal d'antenne redressé, **caractérisé en ce que**
l'étage de charge comprend un CI de chargeur (8) incluant une broche d'entrée connectée à l'étage redresseur et une broche de sortie connectée à la batterie (3), l'antenne (4) du dispositif portable (18) étant exposée au champ magnétique et connectée via l'étage d'appariement (15) à l'étage de redresseur (6) pour redresser un signal d'antenne afin de fournir une tension d'entrée (Ui) au niveau de la broche d'entrée (10) du CI de chargeur (8), et le dans lequel le CI de chargeur (8) fournit un premier courant de charge (I) c) au niveau de la broche de sortie pour charger la batterie (3) pendant une première période de temps (T1) en tant que source d'alimentation avec le premier courant de charge constant (Ic), et dans lequel le dispositif portable (18) comprend un étage de désaccord (19), qui modifie la fréquence de résonance de l'antenne (5) du dispositif portable (18), et **en ce que** l'étage de charge (20) limite la tension d'entrée (Ui) pour le CI de chargeur (8) en commandant l'étage de désaccord (19) pour désaccorder la fréquence de résonance de l'antenne (5) du dispositif portable (18) loin de la fréquence porteuse du champ magnétique, dans lequel :
le dispositif d'alimentation (1) reçoit et traite une information d'ajustement de puissance (16) provenant du seul dispositif portable (18) exposé au champ magnétique afin d'augmenter ou de diminuer la puissance du champ magnétique émis par l'antenne (4) du dispositif d'alimentation (1) et dans lequel l'étage de charge (20) du dispositif portable (18) génère l'information d'ajustement de puissance (16) pour le dispositif d'alimentation (1) afin d'augmenter ou de diminuer la puissance du champ magnétique pour diriger la tension d'entrée (U_{I}) du CI de chargeur (8) dans une plage de tension préférée, en particulier dans la plage de tension de la spécification technique du CI de chargeur (8), et dans lequel
le dispositif portable (18) fournit un second courant de charge (I_{C}) au niveau de la broche de sortie du CI de chargeur (8) pour charger la batterie (3) pendant une seconde période de temps (T2) en tant que source d'alimentation avec le second courant de charge constant (I_{C}) supérieur au premier courant de charge (Ic) afin de fournir suffisamment de puissance pour la montée en puissance du premier courant de charge (I_{C}) au second courant de charge (I_{C}) et l'étage de charge (20) comprend un capteur de température et envoie une information d'ajustement de puissance (16) au dispositif d'alimentation (1) pour augmenter la puissance du champ magnétique et désaccorder sensiblement en même temps l'antenne (5) pendant une période de temps de montée en puissance (T_{R}) afin d'éviter que la température détectée (T_{L}) n'atteigne une limite de température maximale.

8. Procédé selon la revendication 7, **caractérisé en ce que** la fréquence de résonance de l'antenne (5) du dispositif portable (18) est désaccordée loin de la fréquence porteuse du champ magnétique, si la température détectée (T_{L}) atteint une limite de température maximale.

9. Procédé selon la revendication 7 ou 8, **caractérisé en ce que** la fréquence de résonance de l'antenne (5) du dispositif portable (18) est désaccordée loin de la fréquence porteuse du champ magnétique tandis que le CI de chargeur (8) charge la batterie (3) avec le premier courant de charge (Ic) et **en ce que** la fréquence de résonance de l'antenne (5) du dispositif portable (18) est accordée à la fréquence porteuse du champ magnétique tandis que le CI de chargeur (8) charge la batterie (3) avec le second courant de charge (Ic), qui est supérieur au premier courant de charge (Ic).
